# EUROPEAN PATENT SPECIFICATION

(11) **EP 1 636 084 B1**
(45) Date of publication and mention of the grant of the patent: **22.09.2010**
(21) Application number: 04733709.2
(22) Date of filing: 18.05.2004
(51) Int. Cl.: B63B 35/00, B63B 27/00

(54) **A METHOD AND A DEVICE FOR INSTALLATION OF A WINDMILL AT SEA**
VERFAHREN UND VORRICHTUNG ZUR INSTALLATION EINER WINDMÜHLE AUF SEE
PROCEDE ET DISPOSITIF POUR INSTALLER UNE EOLIENNE EN MER

(30) Priority: 21.05.2003 NO 20032285
(43) Date of publication of application: 22.03.2006
(73) Proprietor: Haugsoen, Per Bull, 0776 Oslo (NO); Foss, Gunnar, 2566 JE Den Haag (NL)
(72) Inventor: Haugsoen, Per Bull, 0776 Oslo (NO); Foss, Gunnar, 2566 JE Den Haag (NL)
(74) Representative: Rapp, Bertram
(86) International application number: PCT/NO2004/000150
(87) International publication number: WO 2004/103807

(56) References cited:
- EP-A2- 1 101 935
- WO-A1-01/23252
- WO-A1-03/055741
- WO-A1-03/066427
- DE-U1- 20 010 086
- NL-C2- 1 016 859
- NO-B1- 315 898

## Description

This invention relates to a method for installing a windmill at sea. More particularly it concerns a method which comprises the use of a vessel adapted for the purpose, wherein preferably several, essentially fully assembled windmills can be transported by means of the vessel from a loading site to the installation site, where they are installed by means of devices located on the vessel. The invention also comprises a device in the form of a vessel for practicing the method.

Gradually, windmills for energy production have extensively been put into service, and it is well known that windmills of this kind occupy in part large areas. This condition, together with an aesthetically unfortunate effect of land-based so-called mill parks, has resulted in a desire to locate windmills at sea.

The average wind velocity is greater for the areas of interest at sea than for corresponding areas on land. Thus it is possible to recover more energy from a windmill at sea, where the airflow is also less turbulent, than from a corresponding land-based windmill.

Experience goes to show that the installation of windmills at sea by means of prior art techniques, exhibits a higher cost than the installation of corresponding windmills on land.

It is normal to transport the components of the windmills to the installation site and then assemble the individual windmill parts by means of a conventional crane vessel or a jack-up platform. Crane vessels of this kind are relatively sensitive to waves and wind, and they are thereby dependent on good weather conditions during the installation work. Jack-up platforms are relatively sensitive to wind and waves, and can only operate, in many cases, within a relatively limited range of water depth.

NO patent 315898 describes a ballastable lifting vessel and a method for using a ballastable lifting vessel for lifting, transporting, positioning and installing at least one marine construction.

NO patent application 20015693 deals with a corresponding device to that of NO 315898, but the lifting vessel is provided with a particularly adapted rocking device.

NL 1 016 859 C2 shows a vessel device for transporting and installing a windmill at sea according to the preamble of independent claim 3.

Installation.sites of interest at sea are often relatively shallow and thereby require the vessel, which is to be used not to draw too deep.

The invention has as its object to remedy the drawbacks of the prior art.

The object is realised according to the invention through the features defined in the description below and in the following Claims.

By transporting an essentially fully assembled windmill from a loading site to the installation site, after which the windmill is installed as a unit, possibly in two parts, installation time and costs can be reduced considerably.

According to the invention a vessel adapted for the purpose is used, which is provided, at least on one of its external sides, with a gripping device designed for lifting and transporting a windmill.

At the loading site the windmill is gripped, lifted up and transported to its destination, hanging from the gripper, after which it is lowered onto the seabed or onto a foundation. The foundation may have been placed at the point of installation in advance, or it may be installed by the vessel before or after the windmill is placed at the point of installation.

The foundation may be at the seabed, or it may extend up to the sea surface, comprising piles, for example.

At its lower portion, the vessel is formed with two parallel pontoon-like elongate floating bodies. The floating bodies preferably include propulsion machinery and ballast tanks. The floating bodies are kept apart at a desired spacing by means of two transversal beams in the form of latticework or a box construction, the two beams being connected by their two end portions to respective lower pillar portions. The lower pillar portions are fixedly or detachably connected to the floating bodies, preferably in the area of the end portions of the floating bodies.

A guide pillar extends essentially concentrically up from each of the lower pillar portions. The guide pillars constitute guides for a height-adjustable deck. The relative height of the height-adjustable deck above the pontoons is decided from the depth conditions at the installation site. During the sailing the floating bodies are partly submerged in the sea. At the same time, the transversal beams and the guide pillars are entirely above the sea. Thus the vessel exhibits relatively little sailing resistance.

During the installation work the vessel is lowered into the sea, preferably until it stands on the seabed, and in such a way that the guide pillars are in a position partially submerged. Submersion like that is suitable to reduce the area subjected to wave forces, thereby having the effect that undesired movements are essentially eliminated.

The undersides of the floating bodies are provided with bearing plates, dowels and/or suction anchors in order to ensure steady contact with the seabed.

The gripping device, which is used to hold the windmill, comprises an upper and a lower gripper. Preferably, both grippers are arranged to grip the vertical pillar of the windmill. By pillar is meant, in what follows, any form of vertical supporting element for the windmill. The upper gripper is provided with a rotary device, arranged at least to be able to rotate the pillar about the longitudinal axis of the pillar. The rotary device comprises in a preferred embodiment a supported rotary sleeve detachably connected to the pillar and driven about its vertical axis by a driving gear.

The upper gripper is extendably connected to a lifting arm hingingly supported at its mid portion. The upper gripper projects outwards from the vessel. At its opposite end portion, facing inwards towards the vessel, the lifting arm is adjustably connected to the deck by means of an elongate, length-adjustable object.

The lifting arm is hinged to a height-adjustable and rotatable lifting pillar.

The lower gripper is connected, adjustable in height and to the sides, to the lower pillar portion and the guide pillar.

The configuration of the gripping device enables a relativel accurate positioning of the windmill during the installation work.

When there is a question of installing windmills with particularly long pillars, the pillars may be two-part pillars. For the lower pillar portion a mounting pillar may be used in that event in order to connect the lower pillar portion to the upper gripper during transport and installation.

In a preferred embodiment the vessel is of such a design tha several windmills can be transported at the same time.

The vessel may be provided with a facility for carrying out piling in the sea. It is advantageous that all piles can be position without the vessel having to be moved. Possibly, guides can be used to ensure accurate positioning of the piles. The relatively spacious deck area can be used for storing and transport, and for assembling necessary auxiliar equipment.

In what follows there will be described a non-limiting example of a preferred method and embodiment, which is visualized in the accompanying drawings, in which:
Figure 1 shows in perspective the vessel at the quay, loading windmills;
Figure 2 shows in perspective the vessel during the transport of windmills from the loading site to the installation site;
Figure 3 shows in perspective the vessel submerged in relatively shallow water during the installation work, as viewed from an imaginary position below the seabed;
Figure 4 shows in perspective the vessel submerged in somewhat deeper water during the installation work; and

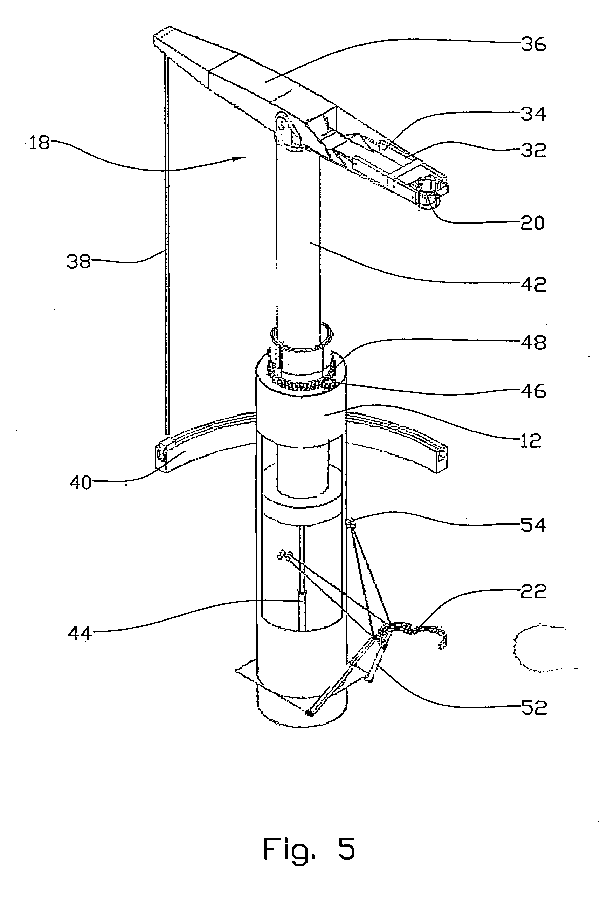

Figure 5 shows in perspective one of the lifting devices of the vessel.

In the drawings the reference numeral 1 identifies a vessel including two elongate parallel floating bodies 2 interconnected by means of two transversal beams 4 and corresponding lower pillar portions 6.

The floating bodies 2 are provided with propulsion machinery 8, not shown, and ballast tanks 10, not shown, in accordance with the prior art known *per se.* The lower pillar portion 6 is detachably connected to its respective floating bodies 2 by means of bolt connections, not shown.

From each of the lower pillar portions 6 a guide pillar 12 extends upwards. The guide pillars 12 constitute guides for a height-adjustable deck 14. The deck 14 is formed to be self-buoyant and is arranged, during the building of the vessel, to be floated into position between the guide pillars 12.

The vessel 1 is provided with anchorings 15 in the form of dowels and suction anchors. The anchorings 15 are arranged underneath the floating bodies 2.

A gripping device 18 comprising an upper gripper 20 and a lower gripper 22 is arranged to receive a windmill 24. The upper gripper 20 is arranged to grip the vertical pillar 26 of the windmill 24, the upper gripper 20 being provided with a supporting and driving device, not shown, for rotating the pillar 26. The upper gripper 20 is movably connected to a lifting arm 36 by means of two guides 32 and two guide cylinders 34.

The lifting arm 36 is adjustably connected at its opposite end portion to the deck 14 by means of a connection 38 adjustable in length, here in the form of a strut, and a rotation guide 40. The lifting arm 36 is hinged at its mid portion to a lifting pillar 42.

The lifting pillar 42 is supported, vertically movable and rotatable, in the guide pillar 12, in which a lifting cylinder 44 is arranged to move the lifting pillar 42 vertically. Through a surrounding gear rim 48 axially movable along the lifting pillar 42, a rotary motor 46 is arranged to rotate the lifting pillar 42 about its longitudinal axis. During rotation of the lifting pillar 42 and thereby the lifting arm 36, the length-adjustable connection 38 is moved along the rotation guide 40.

The lower gripper 22 is arranged to support the pillar 26 in a height-adjustable and laterally adjustable manner by means of length-adjustable struts 52 and winches 54.

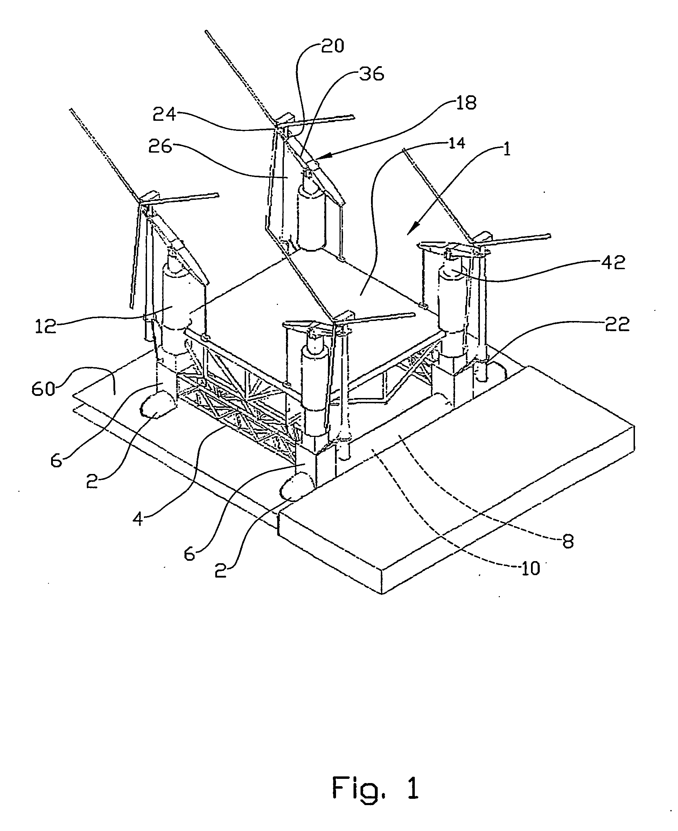

When a windmill 24 is to be installed at sea, the vessel 1 picks up the essentially completed windmill 24 and possibly additional windmills 24 at a loading site, see fig. 1.

During loading, the vessel 1 is relatively shallow draught in relation to the sea surface 60. The relative height of the deck 14 is adjusted according to the sea depth at the installation site.

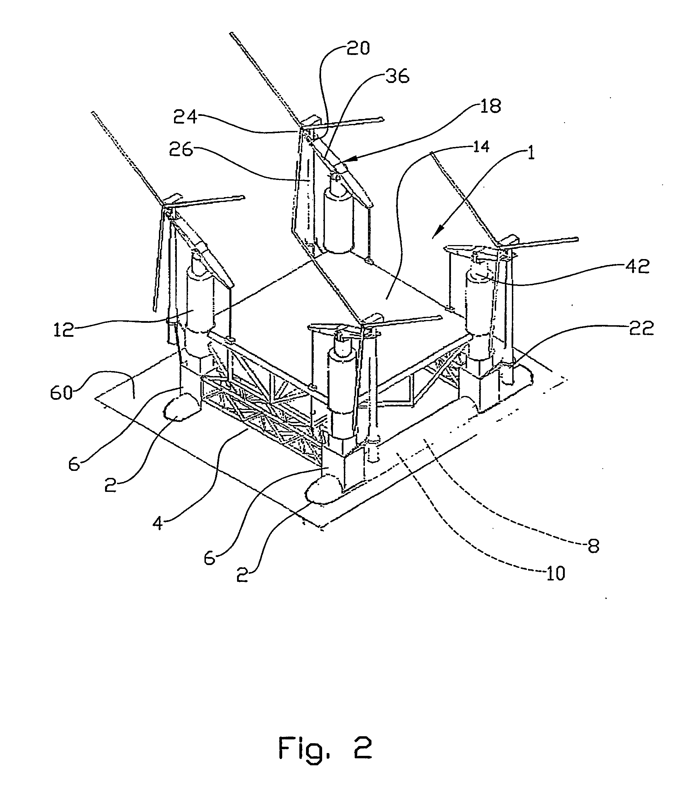

After one or more windmills 24 have been positioned in their respective gripping devices 18, the vessel 1 sails, carrying at least one windmill 24 to the installation site, see Figure 2.

After the vessel 1 has arrived at the installation site, the vessel 1 is lowered onto the seabed 62, where it is secured by means of the anchorings 15.

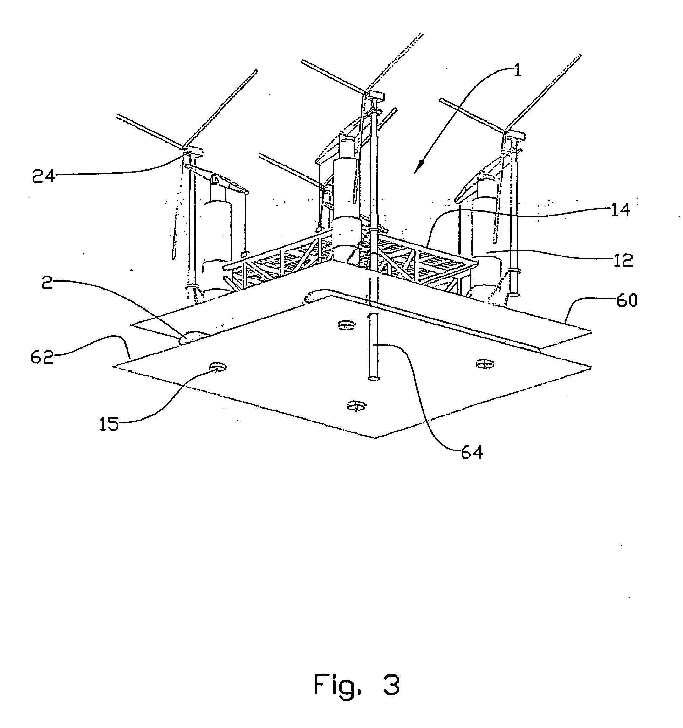

In Figure 3, in which the vessel 1 is shown from an imaginary position underneath the seabed 62, the vessel is set in relatively shallow water. A windmill 24 is being installed on a foundation pillar 64, which may have been installed by means of piling tools, not shown, located on the vessel 1.

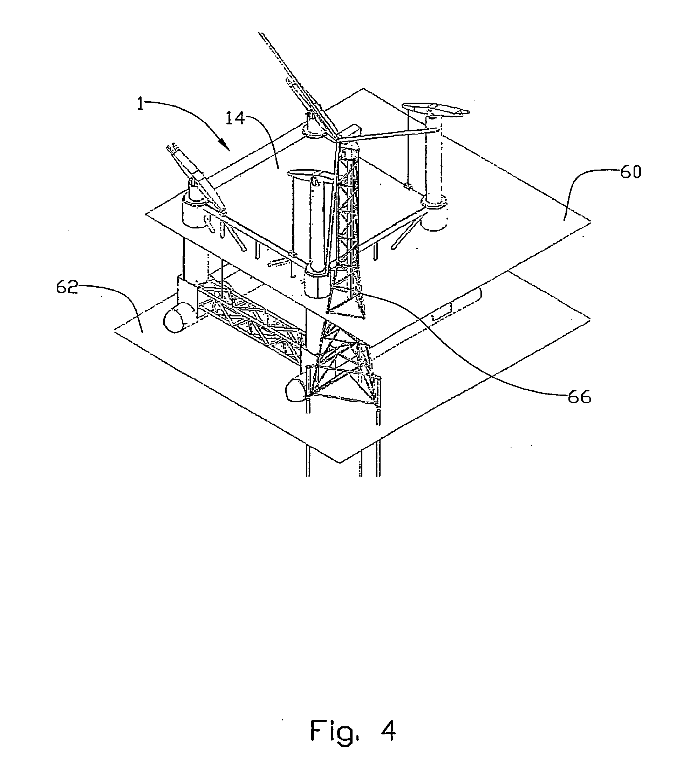

When a windmill 24 is to be mounted in deeper water, see Figure 4, the deck 14 of the vessel 1 is relatively high up on the guide pillars 12. The windmill 24 is being installed in a latticework pillar 66.

During the installation work the windmill is positioned at a suitable height by means of the lifting cylinder 44 and the length-adjustable strut 38. The lifting cylinder 44 moves the lifting pillar 42 in relation to the guide pillar 12, the lifting arm 36 hinged to the lifting pillar 42 being retained at its one end portion by the length-adjustable connection 38, whereby the vertical height of the upper gripper 20 is changed. Correspondingly, by a length-adjustment of the connection 38 the lifting arm 36 rocks at the lifting pillar 42.

The horizontal distance of the windmill 24 from the lifting pillar 42 is adjusted by the guide 32, connected to the upper gripper 20, being moved telescopically within the lifting arm 36 by means of the guide cylinders 34.

By rotating the lifting pillar 42 about its vertical axis by means of the rotary motor 46 and gear rim 48, the windmill is rotated about the longitudinal axis of the lifting pillar 42. During the rotation the strut 38 moves within the rotation guide 40.

The windmill 24 may be rotated about the longitudinal axis of its vertical pillar 26 by means of the supporting and driving device, not shown, of the upper gripper 20 for the rotation of the pillar 26.

The lower gripper 22 supports the pillar 26 and is arranged essentially to follow the movement of the upper gripper 20, the length-adjustable struts 52 and the winches 54 being adjusted correspondingly.

The method and device according to the invention thus enable an essential simplification of the transport and installation work of a windmill 24 at sea, in that reloading of the windmill 24 after picking it up at the loading site is unnecessary and in that the windmill can be placed as a unit on its foundation in an accurate and controlled manner.

## Claims

1. A method for transporting and installing a windmill (24) at sea, using a vessel (1) including a deck (14) and at least one gripping device (18), the gripping device (18) being arranged to receive a windmill (24), **characterized in that** before the transport the windmill (24) is placed into an upper gripper (20) connected to the gripping device (18), and when being installed on a foundation (64, 66), is rotated about the longitudinal axis of a pillar (26) belonging to the windmill (24), by means of the rotary device of the upper gripper (20); is rotated about the lifting pillar (42) of the vessel (1) by means of a rotary device (46, 48); is moved to and from the lifting pillar (42) by means of at least one guide (34) movable to a lifting arm (36) and is height-adjusted by means of a lifting cylinder (44) which is arranged to move the lifting pillar (42) axially.

2. A method in accordance with claim 1, **characterized in that** the windmill (24) is height-adjusted by adjusting the length of a length-adjustable connection (38) extending from the deck (14) through a rotation guide (40) to one end portion of the lifting arm (36).

3. A vessel device (1) for transporting and installing a windmill (24) at sea, the vessel (1) including a deck (14) and at least one gripping device (18), the gripping device (18) being arranged to receive a windmill (24), and the vessel (1) being arranged to be lowered onto the sea bed during the installation work, **characterized in that** the gripping device (18) includes an upper gripper (20) rotatable about its vertical axis and arranged to grip the pillar (26) of the windmill (24) and where the gripper (20) is connected to a lifting arm (36) where the lifting arm (36) is hinged to a lifting pillar (42) and where the lifting pillar (42) is longitudinally movable by means of a lifting cylinder (44).

4. A device in accordance with claim 3, **characterized in that** the deck (14) is height-adjustable. relative to the rest of the hull of the vessel (1).

5. A device in accordance with Claim 3 or 4, **characterized in that** the deck (14) is made self-buoyant.

6. A device in accordance with claim 3, **characterized in that** upper gripper (20) is telescopically movable relative to a lifting arm (36) by means of at least one guide (32) and at least one guide cylinder (34).

7. A device in accordance with claim 6, **characterized in that** the lifting arm (36) is connected at its opposite end portion relative to the at least one guide (32) to a rotation guide (40) connected to the deck (14) by means of a length-adjustable connection (38).

8. A device in accordance with claim 7, **characterized in that** the lifting pillar (42) is arranged to be rotated about its longitudinal axis by means of a rotary motor (46) and a gear rim (48).

## Patentansprüche

1. Verfahren zum Transport und Installation einer Windmühle auf See unter Verwendung eines Wasserfahrzeugs (1) enthaltend ein Deck (14) und mindestens eine Greifvorrichtung (18), wobei die Greifvorrichtung (18) ist zur Aufnahme der Windmühle (24) ausgebildet, **dadurch gekennzeichnet, dass** die Windmühle (24) vor dem Transport in einem mit der Greifvorrichtung (18) verbundenen oberen Greifer (20) angeordnet ist, und wenn sie auf einem Unterbau (64, 66) installiert wird, mittels der Rotationsvorrichtung des oberen Greifers (20) um die Längsachse eines zur Windmühle (24) gehörenden Stützpfeilers (26) rotiert wird; mittels einer Rotationsvorrichtung (46, 48) um den Hebestützpfeiler (42) des Wasserfahrzeugs (1) rotiert wird; mittels mindestens einer zu einem Hebearm (36) bewegbaren Führung (34) zu und von dem Hebestützpfeiler (42) bewegt wird und mittels eines zum axialen Bewegen des Hebepfeilers (42) ausgebildeten Hebezylinders (44) höhenangepasst wird.

2. Verfahren nach Anspruch 1, **dadurch gekennzeichnet, dass** die Windmühle (24) durch Anpassen der Länge einer sich vom Deck (14) über eine Rotationsführung (40) zu einem Endabschnitt des Hebearms (36) erstreckenden längsanpassbaren Verbindung (38) höhenangepasst wird.

3. Wassarfahrzeugvorrichtung (1) zum Transport und Installation einer Windmühle (24) auf See, das Wasserfahrzeug (1) umfasst ein Deck (14) und mindestens eine Greifvorrichtung (18), wobei die Greifvorrichtung (18) zur Aufnahme einer Windmühle (24) ausgebildet ist, und wobei das Wasserfahrzeug (1) ausgebildet ist, um während der Installationsarbeiten auf den Seeboden abgesenkt zu werden, **dadurch gekennzeichnet, dass** die Greifvorrichtung (18) einen um seine vertikale Achse rotierbaren und zum Greifen eines Stützpfeilers (26) der Windmühle (24) ausgebildeten oberen
Greifer (20) enthält, Wobei der Greifer (20) mit einem Hebearm (36) verbunden ist, wobei der Hebearm (36) an einem Hebestützpfeiler (42) angelenkt ist, und wobei der Hebestützpfeiler (42) mittels eines Hebezylinders (44) längs bewegbar ist.

4. Vorrichtung nach Anspruch 3, **dadurch gekennzeichnet, dass** das Deck (14) relativ zu dem Rest des Rumpfs des Wasserfahrzeugs (1) höhenanpassbar ist.

5. Vorrichtung nach Anspruch 3 oder 4, **dadurch gekennzeichnet, dass** das Deck (14) selbstschwimmend ausgebildet ist.

6. Vorrichtung nach Anspruch 3, **dadurch gekennzeichnet, dass** der obere Greifer (20) relativ zum Hebeann (36) mittels mindestens einer Führung (32) und mindestens eines Führungszylinders (34) teleskopisch bewegbar ist.

7. Vorrichtung nach Anspruch 6, **dadurch gekennzeichnet, dass** der Hebearm (36) an seinem der mindestens einen Führung (32) gegenüberliegenden Endabschnitt mittels einer längsalipassbaren Verbindung (38) mit einer mit dem Deck (14) verbundenen Rotationsführung (40) verbunden ist.

8. Vorrichtung nach Anspruch 7, **dadurch gekennzeichnet, dass** der Hebestützpfeiler (42) ausgebildet ist, um mittels eines Rotationsmotors (46) und eines Zahnkranzes (48) um seine Längsachse rotiert zu werden.

## Revendications

1. Procédé de transport et d'installation d'une éolienne (24) en mer, utilisant un bâtiment naval (1) comprenant un pont (14) et au moins un dispositif de préhension (18), le dispositif de préhension (18) étant agencé pour recevoir une éolienne (24), **caractérisé en ce que**, avant le transport, l'éolienne (24) est placée dans un moyen de pincement (20) supérieur relié au dispositif de préhension (18) et, lorsqu'on l'installe sur une fondation (64, 66), elle est déplacée en rotation autour de l'axe longitudinal d'un mât (26) faisant partie de l'éolienne (24), au moyen du dispositif de rotation du moyen de pincement (20) supérieur, elle est déplacée en rotation autour de la colonne de soulèvement (42) du bâtiment naval (1) au moyen d'un dispositif de rotation (46, 48), elle est rapprochée et éloignée de la colonne de soulèvement (42) au moyen d'au moins un guide (34) mobile vis-à-vis d'un bras de soulèvement (36) et elle est réglée en hauteur au moyen d'un vérin de soulèvement (44) qui est agencé de façon à déplacer axialement la colonne de soulèvement (42).

2. Procédé suivant la revendication 1, **caractérisé en ce que** l'éolienne (24) est réglée en position en hauteur par réglage de la longueur d'une jonction (38) réglable en longueur s'étendant depuis le pont (14), par l'intermédiaire d'un guide de rotation (40), jusqu'à une partie d'extrémité du bras de soulèvement (36).

3. Dispositif du type bâtiment naval (1) destiné à transporter et à installer une éolienne (24) en mer, le bâtiment naval (1) comprenant un pont (14) et au moins un dispositif de préhension (18), le dispositif de préhension (18) étant agencé de façon à recevoir une éolienne (24), et le bâtiment naval (1) étant agencé de façon à être abaissé sur le fond marin pendant l'opération d'installation, **caractérisé en ce que** le dispositif de préhension (18) comprend un moyen de pincement (20) supérieur pouvant être déplacé en rotation autour de son axe vertical et agencé de façon à pincer le mât (26) de l'éolienne (24), et **en ce que** le moyen de pincement (20) est relié à un bras de soulèvement (96), que le bras de soulèvement (36) est articulé vis-à-vis d'une colonne de soulèvement (42) et que la colonne de soulèvement (42) est déplaçable longitudinalement au moyen d'un vérin de soulèvement (44).

4. Dispositif suivant la revendication 3, **caractérisé en ce que** le pont (14) est réglable en hauteur vis-à-vis du reste de la coque du bâtiment naval (1).

5. Dispositif suivant la revendication 3 ou 4, **caractérisé en ce que** le pont (14) est d'une réalisation à auto-flottation.

6. Dispositif suivant la revendication 3, **caractérisé en ce que** le moyen de pincement (20) supérieur est déplaçable d'une manière télescopique vis-à-vis d'un bras de soulèvement (36) au moyen d'au moins un guide (32) et d'au moins un vérin de guidage (34).

7. Dispositif suivant la revendication 6, **caractérisé en ce que** le bras de soulèvement (36) est relié, à sa partie d'extrémité opposée vis-à-vis du au moins guide (32), à un guide de rotation (40) relié au pont (14) au moyen d'une jonction (38) réglable en longueur.

8. Dispositif suivant la revendication 7, **caractérisé en ce que** la colonne de soulèvement (42) est agencée de façon être déplacée en rotation autour de son axe longitudinal au moyen d'un moteur rotatif (46) et d'une couronne dentée (48).
